# EUROPEAN PATENT SPECIFICATION

(11) **EP 2 319 716 B1**
(45) Date of publication and mention of the grant of the patent: **27.06.2012**
(21) Application number: 09425447.1
(22) Date of filing: 06.11.2009
(51) Int. Cl.: B60G 7/04, B60G 11/44, B60G 11/46, B60T 17/08

(54) **Front suspension system for an industrial vehicle with full air braking system**
Vorderes Aufhängungssystem für ein Industriefahrzeug mit komplettem Druckluftbremssystem
Système de suspension avant pour véhicule industriel avec système de freinage pneumatique complet

(43) Date of publication of application: 11.05.2011
(73) Proprietor: Iveco S.p.A., 10156 Torino (IT)
(72) Inventor: Lorenzetti, Giorgio, 10141 Torino (IT)
(74) Representative: Borsano, Corrado

(56) References cited:
- EP-A1- 0 352 541
- EP-A1- 1 375 203
- NL-A- 8 703 122
- US-A1- 2006 208 445
- US-A1- 2007 013 160

## Description

### Field of the invention

The present invention refers to a front suspension system for an industrial vehicle with a full air braking system, in particular for the transport of goods and/or passengers.

### Description of the prior art

Pneumatic suspensions are currently used in goods vehicles, thanks to the possibility to adjust the height of the vehicle, in order to align it with the floor of any warehouse. **Examples of known suspension systems for an industrial vehicle are disclosed in** EP 0352541 and in US2006/0208445**.**

According to a further aspect, some goods suffer from the vibrations due to the ravelled road surface, such as fizzy drinks and explosives.

Moreover, pneumatic suspensions are particularly comfortable when carrying passengers.

On the other hand, vehicles with a narrow track are to be preferred for the final distribution of the goods, or for carrying a limited number of passengers, in order to travel more easily on the downtown roads. This category of vehicles has between 200 and 230 cm of width and from 60 quintals of carrying capacity.

Narrow track vehicles, due to part arrangement problems, are usually provided with a hydraulic or partially pneumatic braking system. Therefore, in the production line, it is necessary to contrive a working station where the drainage of the hydraulic circuit or of the portion of the hydraulic circuit is performed.

Moreover, using pneumatic suspensions is not easy, due to their considerable dimensions. The problem is even more critical when the braking system has to be of the full air type, namely comprising rotochambers. A rotochamber is a device suitable to make the caliper directly controlled by the air pressure of the pneumatic circuit. A rotochamber is assembled as integral with a caliper and extends toward the longitudinal axle of the vehicle, further limiting the space available for the suspensions.

The use of pneumatic suspensions and of full air braking system is already known in the art, but in vehicles with considerable dimensions, namely not in narrow track vehicles. The arrangement of the elements defining the suspension system and of the elements defining the braking system is particularly critical for the front axle, where steering wheels are present, since when wheels are steering, they cover an area around the hub, which has to be kept free in order to avoid limiting the steering angle.

A further problem derives from the dimensions of the engine, which has to be housed between the side members defining the vehicle frame. Therefore there should be enough space between the two side members.

One of the needs that are particularly felt for the production of said industrial vehicles is from the one hand the need to assemble a single chassis with a single suspension type suitable for any use, and from the other hand is to use the same production line for assembling vehicles with different carrying capacity. Hence a drainage station should not be arranged, when not all vehicles need it. Therefore the technical problem to be solved is that of realizing a suspension configuration, whose dimensions allow to use a pneumatic suspension system and a full air braking system.

### Summary of the invention

The aim of the present invention is to provide a front suspension system for an industrial vehicle with a full air braking system that solves all the problems set forth above. The subject of the present invention is to provide a front suspension system for an industrial vehicle with a full air braking system, according to claim 1.

Therefore, according to the present invention, the suspension system comprises both a leaf spring and a pneumatic element. **The system also** comprises a shock absorber placed beside said pneumatic element. In particular, in order to avoid interfering with the steering of the wheels, the pneumatic elements are preferably placed between the vehicle frame and the leaf springs, in correspondence of the connection of the leaf springs with the wheel axle.

Moreover, according to a preferred alternative embodiment of the invention, the rotochambers of the calipers are placed over the wheel hubs, so that articulated joints connecting to the steering gear tie rod can be placed below the hub, so that said tie rod do not interfere with the rotochambers.

The dependent claims describe the preferred embodiments of the invention, and are an integral part of this description.

### Brief description of the Figures

Further characteristics and advantages of the invention will be more apparent in light of a detailed description of a preferred, but non-exclusive, embodiment of a front suspension system for an industrial vehicle with full air braking system, shown with the help of the drawings that are attached hereto, which are merely illustrative and not limitative, in which:
Fig. 1 shows a isometric view of a suspension according to the present invention,
Fig. 2 shows a side view of the suspension in figure 1,
Fig. 3 shows a view in a plan of the suspension of the previous figure,
Fig. 4 shows an enlarged view of a portion of figure 1.

In the drawings the same reference numbers and letters are used to identify the same elements or components.

### Detailed description of a preferred embodiment of the invention

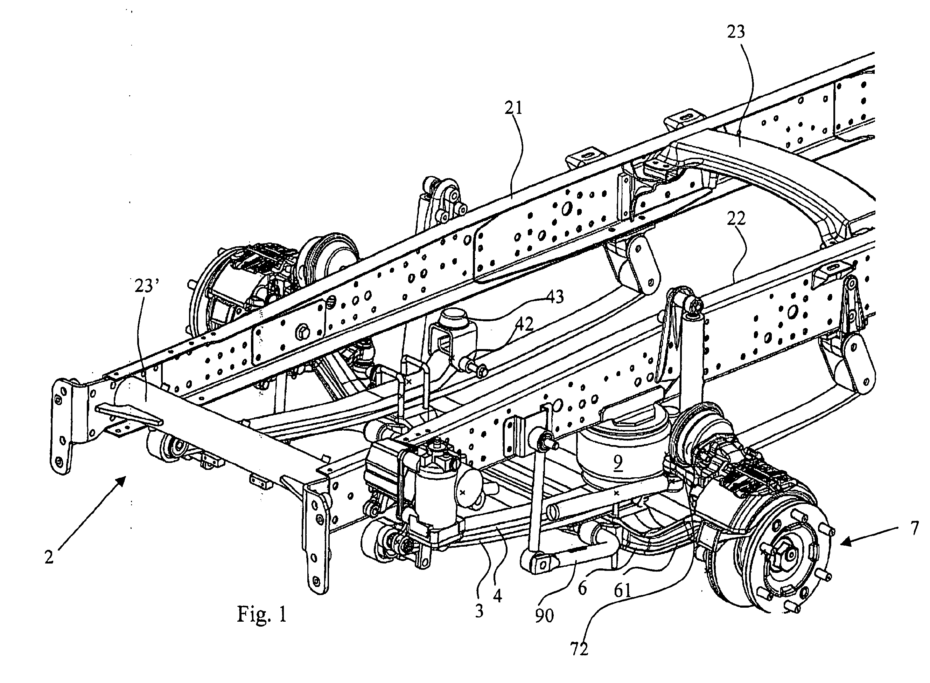

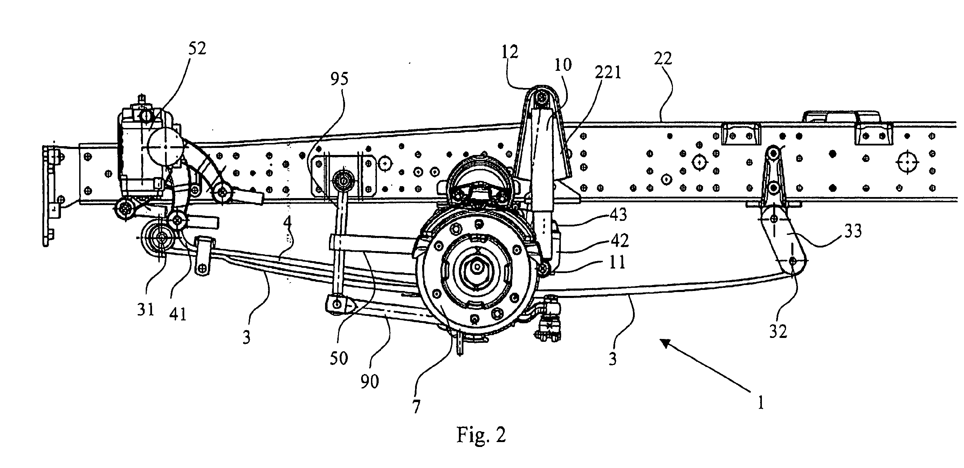

With reference to figures 1 and 2, the suspension that is subject of the present invention is contrived to equip a narrow track industrial vehicle, namely with an overall width of the vehicle preferably lower than 250 cm.

The vehicle comprises a vehicle frame which consists of a pair of side members 21 and 22 parallel between each other, interconnected by cross members 23 and 23'.

The suspension subject of the invention comprises a leaf spring 3 whose first end 31 and whose second end 32 are constrained to the vehicle frame. In particular, the first end is hinged to the frame, while the second end is hinged to an arm 33, the arm being hinged to the frame. Therefore, when a stress tends to rectify the leaf spring, the arm 33 allows an axial movement of the leaf spring 3.

A control arm 4 is placed over said leaf spring, that is beside its side that faces the longitudinal member 22 of the vehicle. A first end 41 of the control arm is constrained to the frame together with said first end 31 of the leaf spring 3, that is having the same hinging point, while a second end 42, that can be seen in figure 1, is constrained to the middle of the leaf spring 3.

Said control arm is suitable to cooperate with the leaf spring in the deflexion, being at least partially adherent with the leaf spring.

The second end 42 of the control arm comprises a bend toward the frame, so that on the extremity a U bolt can be inserted, having on its upper part a pad 43 which has the function to deaden the blows of the end 42 of the control arm 4 to the frame, in particular when the stresses bring the suspension to the limit stop. This bend is a little beyond the middle of the leaf spring, as it can be seen in figure 2. The position of said pad is particularly advantageous, since it is easily reachable when it needs to be replaced, and it is visible, hence it is easy to determine its wear state.

The front axle 6 is connected to the lower part of the leaf spring 3, in correspondence of said middle area. It is U-shaped, so that the arms 61 bring the hub axis 7 above the control arm 4, as it can be seen in figure 2. This is particularly advantageous because it allows to keep the height of the suspension low and therefore also the loading platform of the vehicle is kept low.

In correspondence of the interconnection between the axle 3 and the leaf spring 3, a pneumatic element 9 is placed between the leaf spring and the side member 22.

Thus it works between the axle 6 of the wheels and the side member 22 undergoing compression stresses only, said two elements being particularly stiff.

A shock absorber 10 of any of the type known is placed beside said pneumatic element 9. A first end of said shock absorber is hinged to said second end 42 of the control arm 4, while a second end is constrained to the frame.

In particular, in order to allow the use of a shock absorber having an appropriate extension, but keeping the height of the suspension low, a plate 221 is applied to the side member 22, to which said second end 12 of the shock absorber 10 is hinged. The plate projects over the side member 22, externally with respect to the frame, that is on the side of the frame facing the hub 7 of the wheel.

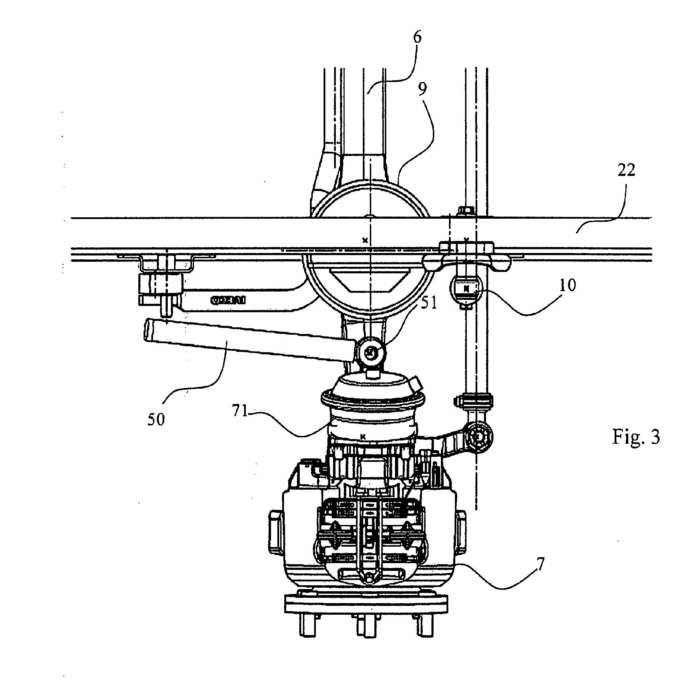

Thus, as it can be seen in figures 2 and 3, the shock absorber 10 works externally with respect to the pneumatic element 9 and it does not determine an increase of the height of the suspension.

Moreover, said shock absorber 10 is placed beside the pneumatic element 9 at the minimum distance necessary for guaranteeing that the two elements do not interfere with each other, in particular during the compression of the pneumatic element 9. In particular, the shock absorber 10, in the side view of figure 2, overlaps said second end 42 of the control arm 4. Being the section of the shock absorber remarkably smaller than the pneumatic element, it does not extend towards the wheel more than the pneumatic element 9. Moreover, the fact that the suspension 1 comprises both a pneumatic element 9, and a leaf spring 3 which cooperates with the control arm, allows the pneumatic element 9 to have small dimensions, and guarantees a low resonance frequency of the suspension.

Thanks to the disposition of the elements as described above and shown in the figures, the rotochamber 71, integral with the relative caliper, and the relative pneumatic pipe do not interfere with the suspension system, even when an excessive wear of the pads makes the caliper move toward the inside of the vehicle, namely toward the pneumatic element 9. Thus, an industrial vehicle according to the present invention, for example being 220 cm wide, can guarantee a steering angle for example of 52° and 36° or wheel angle, respectively the external angle and the interior angle that the wheel can reach with respect to a longitudinal alignment.

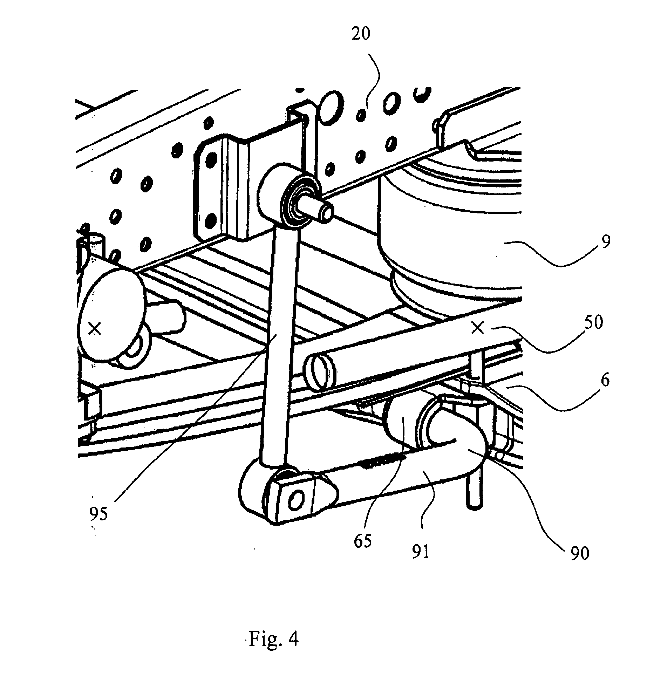

According to another aspect of the invention, with reference to figures 2 and 3, the caliper is placed above the hub 7, therefore the rotochamber is oriented in the twelve o'clock position with respect to the brake disc. Just under the rotochamber 71, a connection element 72 projects from the hub 7 towards the longitudinal axle of the vehicle. In such connection element an articulated joint 51 is made for connecting to the steering gear tie rod 50. Thus the articulated joint 51 is in a lower position with respect to the rotochamber 71, without interfering with it. The figure also shows the actuator 52 of the assisted driving. According to a further aspect of the invention, with reference to figure 4 which shows an enlarged view of a portion of figure 1, a higher stability is given to the vehicle by means of a U-shaped torsion bar 90, having a linear part parallel with the axle 6 rotatably constrained to said axle by means of one or more eyes 65.

Said torsion bar 90, comprises, for each of its ends, an arm whose free end is hinged to the vehicle frame by means of a connecting rod 95, in order to define a coupling connecting rod-crank.

Taking as reference the axle of the pneumatic element 9, the torsion bar 90 is constrained to the axle 6 on the opposite side with respect to the side where the shock absorber 10 is housed. Therefore the elements forming the torsion bar do not interfere with the shock absorber, being restrained in a space that does not interfere even with the rotation of the wheel of the vehicle during the hub movement 7.

The elements and the characteristics described in the different preferred embodiments may be combined without departing from the scope of the present invention.

From the description set forth above it will be possible for the person skilled in the art to embody the invention with no need of describing further construction details.

## Claims

1. Front suspension system for an industrial vehicle with full air braking system, comprising calipers equipped with a rotochamber (71), said front suspension system comprising:
- an axle (6);
- a leaf spring (3) hinged by a first (31) and a second end (32) to the frame (22) of said vehicle, said axle (6) being connected to the lower part of said leaf spring (3);
- a control arm (4) whose first end (41) is hinged to the frame (22) of said vehicle and whose second end (42) is restricted above said connection of the leaf spring (3) with the axle (6);
- a pneumatic element (9) placed between said control arm (4) and said frame (22) above said connection of the leaf spring (3) with the axle (6),
wherein said front suspension system further comprises a shock absorber (10) hinged between said second end (42) of said control arm (4) and the frame (22), externally to the frame by means of a plate (221) which projects over it.

2. System according to claim 1, wherein said second end (42) of said control arm (4) comprises a bend towards the frame to which a U bolt is connected having a limit stop pad (43) over it.

3. System according to any of the previous claims, wherein said axle is U-shaped, and each one of its arms (61) has a hub (7) over the control arm (4).

4. System according to any of the previous claims, wherein each hub comprises a caliper equipped with a rotochamber (72) placed over the hub (7), so that the rotochamber is oriented in the twelve o'clock position.

5. System according to claim 4, wherein under the rotochamber (71), from the hub (7) towards the longitudinal axle of the vehicle a connection element (72) projects, wherein an articulated joint (51) is made for the connection to the steering gear tie rod (50).

6. System according to any of the previous claims, further comprising a torsion bar (90) which comprises for each end an arm (91) whose free end is hinged to the vehicle frame by means of a connecting rod (95), in order to define a connecting rod-crank coupling, being a linear part of said torsion bar parallel with the axle (6) and rotatably constrained to said axle by means of two or more eyes (65).

7. System according to claim 6, wherein said torsion bar (90) is constrained to the axle (6) on the opposite side with respect to the side where the shock absorber (10) is housed.

8. Vehicle comprising a front suspension system according to any of the previous claims.

9. Vehicle according to claim 8, having overall width lower than 250 cm.

## Patentansprüche

1. Vorderes Aufhängungssystem für ein industrielles Fahrzeug mit vollständigem Druckluftbremssystem, das Sättel umfasst, die mit einer Rotorkammer (71) ausgestattet sind, wobei das vordere Aufhängungssystem umfasst:
- eine Achse (6);
- eine Blattfeder (3), die durch ein erstes (31) und ein zweites Ende (32) an dem Rahmen (22) des Fahrzeugs angelenkt ist, wobei die Achse (6) mit dem unteren Teil der Blattfeder (3) verbunden ist;
- einen Lenker (4), dessen erstes Ende (41) an dem Rahmen (22) des Fahrzeugs angelenkt ist und dessen zweites Ende (42) oberhalb der Verbindung der Blattfeder (3) mit der Achse (6) begrenzt ist;
- ein pneumatisches Element (9), das zwischen dem Lenker (4) und dem Rahmen (22) oberhalb der Verbindung der Blattfeder (3) mit der Achse (6) angeordnet ist,
- wobei das vordere Aufhängungssystem darüber hinaus einen Stoßdämpfer (10) umfasst, der zwischen dem zweiten Ende (42) des Lenkers (4) und dem Rahmen (22) außerhalb des Rahmens mittels einer Platte (221), die über diesen vorsteht, angelenkt ist.

2. System nach Anspruch 1,
wobei das zweite Ende (42) des Lenkers (4) eine Biegung in Richtung des Rahmens umfasst, mit der ein U-Bolzen verbunden ist, der ein Endanschlagspolster (43) darüber aufweist.

3. System nach einem der vorhergehenden Ansprüche,
wobei die Achse U-förmig ist, und ein jeder ihrer Arme (61) eine Nabe (7) über dem Lenker (4) aufweist.

4. System nach einem der vorhergehenden Ansprüche,
wobei jede Nabe einen Sattel umfasst, der mit einer Rotorkammer (72) ausgestattet ist, die über der Nabe (7) angeordnet ist, sodass die Rotorkammer in Richtung der Zwölf-Uhr-Stellung orientiert ist.

5. System nach Anspruch 4,
wobei unter der Rotorkammer (71), von der Nabe (7) aus in Richtung der Längsachse des Fahrzeugs ein Verbindungselement (72) vorsteht, wobei ein angelenktes Verbindungsstück (51) für die Verbindung mit der Lenkgetriebeverbindungsstange (50) hergestellt ist.

6. System nach einem der vorhergehenden Ansprüche,
das ferner einen Torsionsstab (90) umfasst, der für jedes Ende einen Arm (91) umfasst, dessen freies Ende an dem Fahrzeugrahmen mittels einer Pleuelstange (95) angelenkt ist, um eine Pleuelstangen-Kurbel-Kopplung zu definieren, die ein linearer Teil des Torsionsstabs parallel zu der Achse (6) ist und an der Achse mittels zweier oder mehrerer Augen (65) drehbar festgelegt ist.

7. System nach Anspruch 6,
wobei der Torsionsstab (90) an der Achse (6) auf der entgegengesetzten Seite mit Bezug auf die Seite, an der der Stoßdämpfer (10) untergebracht ist, festgelegt ist.

8. Fahrzeug mit einem vorderen Aufhängungssystem nach einem der vorhergehenden Ansprüche.

9. Fahrzeug nach Anspruch 8,
das eine Gesamtbreite von weniger als 250 cm aufweist.

## Revendications

1. Système de suspension avant pour véhicule industriel avec système de freinage pneumatique complet, comprenant des étriers équipés d'une chambre de rotation (71), ledit système de suspension avant comprenant :
- un essieu (6) ;
- un ressort à lame (3) articulé, par des première (31) et seconde (32) extrémités, au cadre (22) dudit véhicule, ledit essieu (6) étant relié à la partie inférieure dudit ressort à lame (3) ;
- un bras de commande (4) dont la première extrémité (41) est articulée au cadre (22) dudit véhicule et dont la seconde extrémité (42) est limitée au-dessus de ladite liaison du ressort à lame (3) à l'essieu (6) ;
- un élément pneumatique (9) positionné entre ledit bras de commande (4) et ledit cadre (22) au-dessus de ladite liaison du ressort à lame (3) avec l'essieu (6),
dans lequel ledit système de suspension avant comprend en outre un amortisseur de chocs (10) articulé entre ladite seconde extrémité (42) dudit bras de commande (4) et le cadre (22), extérieurement au cadre au moyen d'une plaque (221) qui fait saillie par-dessus celui-ci.

2. Système selon la revendication 1, dans lequel ladite seconde extrémité (42) dudit bras de commande (4) comprend un pli vers le cadre auquel un boulon en U est relié, possédant un patin de butée de fin de course (43) par-dessus celui-ci.

3. Système selon l'une quelconque des revendications précédentes, dans lequel ledit essieu présente une forme de U, et chacun de ses bras (61) comporte un moyeu (7) par-dessus le bras de commande (4).

4. Système selon l'une quelconque des revendications précédentes, dans lequel chaque moyeu comprend un étrier équipé d'une chambre de rotation (72) positionnée par-dessus le moyeu (7), pour que la chambre de rotation soit orientée dans la position de midi.

5. Système selon la revendication 4, dans lequel, en dessous de la chambre de rotation (71), à partir du moyeu (7) vers l'axe longitudinal du véhicule, un élément de liaison (72) fait saillie, dans lequel un joint articulé (51) est réalisé pour la liaison à la biellette de boîtier de direction (50).

6. Système selon l'une quelconque des revendications précédentes, comprenant en outre une barre de torsion (90) qui comprend, pour chaque extrémité, un bras (91), dont l'extrémité libre est articulée au cadre de véhicule au moyen d'une bielle (95), afin de définir un accouplement bielle-manivelle, une partie linéaire de ladite barre de torsion étant parallèle avec l'essieu (6) et fixée de façon rotative audit essieu au moyen de deux, ou plus, oeillets (65).

7. Système selon la revendication 6, dans lequel ladite barre de torsion (90) est fixée à l'essieu (6) sur le côté opposé par rapport au côté où l'amortisseur de chocs (10) est logé.

8. Véhicule comprenant un système de suspension avant selon l'une quelconque des revendications précédentes.

9. Véhicule selon la revendication 8, possédant une largeur totale inférieure à 250 cm.
